# EUROPÄISCHE PATENTSCHRIFT

(11) **EP 4 615 727 B1**
(45) Veröffentlichungstag und Bekanntmachung des Hinweises auf die Patenterteilung: **19.08.2026**
(21) Anmeldenummer: 23798732.6
(22) Anmeldetag: 27.10.2023
(51) Int. Cl.: B60S 1/38

(54) **WISCHLEISTE UND WISCHBLATT DIESE ENTHALTEND**
WIPER STRIP AND WIPER BLADE CONTAINING SAME
BANDE D'ESSUIE-GLACE ET BALAI D'ESSUIE-GLACE LA CONTENANT

(30) Priorität: 09.11.2022 DE 102022211824
(43) Veröffentlichungstag der Anmeldung: 17.09.2025
(73) Patentinhaber: Robert Bosch GmbH, 70442 Stuttgart (DE)
(72) Erfinder: ERISMIS, Harun, 3080 Tervuren (BE); BUSEYNE, Wim, 3500 Hasselt (BE); SZABO, Bence, 4234 Szakoly (HU); WILMS, Christian, 3582 Beringen-Koersel (BE); GOTZEN, Nicolaas, 3070 Kortenberg (BE)
(86) Internationale Anmeldenummer: PCT/EP2023/080074
(87) Internationale Veröffentlichungsnummer: WO 2024/099801

(56) Entgegenhaltungen:
- DE-A1- 102005 053 811
- DE-A1- 102008 042 004
- DE-A1- 102017 221 299

## Beschreibung

Die vorliegende Erfindung bezieht sich auf eine Wischleiste, ein Wischblatt diese enthaltend sowie auf deren Verwendung gemäß dem Oberbegriff der unabhängigen Patentansprüche.

### Stand der Technik

Wischblätter für Kraftfahrzeuge weisen üblicherweise metallische Federschienen auf, die in einen Gummikörper eingreifen, welcher zur Reinigung beispielsweise einer Frontscheibe des Kraftfahrzeugs dient. Die Federschiene dient dazu, einen entsprechenden Anpressdruck auf den Gummikörper des Wischblatts auszuüben und somit eine Reinigungswirkung des Wischblatts zu gewährleisten. Am Ende einer jeweiligen Wischbewegung des Wischblatts kommt es an einem Umkehrpunkt des Wischblatts zu einem Umklappen des Gummikörpers des Wischblatts.

In diesem Moment des Umkehrpunkts kommt es gegebenenfalls zu einem physischen Kontaktverlust von Teilen des Gummikörpers bezogen auf die metallische Federschiene. Sobald eine erneute Wischbewegung in Gegenrichtung einsetzt, ist der physische Kontakt zwischen Gummikörper und Federschiene wieder gewährleistet. Durch den temporären Kontaktverlust von Gummikörper und Federschiene kann es jedoch zu unangenehmen Umlegegeräuschen des Wischblatts am Umkehrpunkt zwischen zwei Wischbewegungen kommen. Eine derartige Geräuschentwicklung ist unerwünscht.

Diesbezüglich ist es aus der DE 10 2008 042 004 A1 oder aus der DE 10 2005 053811 A1 bekannt, eine Wischleiste für ein Wischblatt zur Verfügung zu stellen, bei der der Gummikörper der Wischleiste eine mit einer Federschiene in Kontakt stehende Kopfleiste und einen mit einer einer Glasfläche zugewandten Wischlippe in Kontakt stehenden Stützabschnitt aufweist, wobei der Stützabschnitt und die gegenüberliegende Kopfleiste der Wischleiste so ausgebildet sind, dass beim Umlegen der Wischlippe ein Abrollen des Stützabschnitts an der Kopfleiste erfolgt.

Weiterhin ist aus der DE 10 2019 205 931 A1 eine weitere Wischleiste bekannt, bei der sich zwischen einem die Wischlippe umfassenden Stützabschnitt und einem Kopfabschnitt der Wischleiste ein Dämpfungselement befindet, welches im Umkehrpunkt der Wischleiste im Betrieb eine Anschlagsfläche definiert, an der sich das Dämpfungselement und das Kopfteil der Wischleiste im Moment des Umklappens der Wischleiste berühren.

### Offenbarung der Erfindung

Erfindungsgemäß wird eine Wischleiste, ein Wischblatt diese enthaltend und deren Verwendung mit den kennzeichnenden Merkmalen der unabhängigen Patentansprüche zur Verfügung gestellt.

### Vorteile der Erfindung

So wird eine Wischleiste in Form eines Gummikörpers bereitgestellt, welche einen Wischkeil umfasst, an dem eine Wischlippe zur Reinigung einer Oberfläche ausgebildet ist, und ein Kopfteil, welches über einen Kippsteg mit dem Wischkeil verbunden ist und welches auf gegenüberliegenden Seiten des Kopfteils jeweils eine Längsnut bezogen auf die Längserstreckung der Wischleiste aufweist, die den Eingriff einer insbesondere metallischen Federschiene in die Längsnuten der Kopfleiste ermöglicht. Das Kopfteil der Wischleiste umfasst weiterhin mindestens ein Dämpfungselement, welches mit mindestens einem freien Ende so positioniert ist, dass es den Öffnungsquerschnitt einer der Längsnuten verjüngt bzw. verengt.

Der besondere Vorteil der beschriebenen Maßnahme besteht darin, dass Umklappgeräusche eines klassischen Wischblatts vermieden oder zumindest reduziert werden, die sonst im Umkehrpunkt zwischen zwei Wischbewegungen aus einem Kontaktverlust zwischen einer Federschiene des Wischblatts und einem durch die Federschiene gehaltenen Gummikörper zustande kommen. Die erfindungsgemäße Wischleiste weist demgegenüber ein Dämpfungselement auf, das aufgrund der Positionierung seines freien Endes die Längsnut der Wischleiste, die einem Eingriff durch eine Federschiene dient, verjüngt. Dies gewährleistet auch bei einer Umklappbewegung der Wischleiste weiterhin einen zuverlässigen Kontakt zwischen dem Gummikörper der Wischleiste und einer in diesen eingreifenden Federschiene. Sollte der Kontakt zwischen dem Gummikörper der Wischleiste und einer in diesen eingreifenden Federschiene trotz dieser Maßnahme nicht vollständig aufrecht erhalten werden können, so tritt doch immerhin ein reduzierter Spalt zwischen dem Gummikörper der Wischleiste und einer in diesen eingreifenden Federschiene im Umkehrpunkt auf und somit resultieren stark reduzierte Umklappgeräusche.

Dies ist insbesondere darauf zurückzuführen, dass ein die Längsnut der Wischleiste verengendes freies Ende des Dämpfungselements beim Einführen einer Federschiene zur Seite gebogen wird, so dass die Federschiene die Längsnut der Wischleiste vollausfüllend positioniert werden kann, jedoch gleichzeitig das Dämpfungselement aufgrund seiner Elastizität mit einem leichten Anpressdruck mit der Oberfläche der Federschiene in Kontakt bleibt.

Kommt es im Umkehrpunkt der Wischleiste zwischen zwei Wischbewegungen zu einem Umklappen des Gummikörpers und somit zu einer geometrischen Verzerrung des Gummiprofils, kann es zwar zu einer Aufweitung der Längsnut im Bereich des Kopfteils der Wischleiste derart kommen, dass ein physischer Kontaktverlust zwischen Gummikörper und Federschiene auftritt. Aufgrund des Anpressdrucks des freien Endes des Dämpfungselements an der Federschiene bleibt dieses jedoch weiterhin in physischem Kontakt mit der Federschiene. Dies wirkt sich günstig in Bezug auf eine Vermeidung von Umleggeräuschen des Gummikörpers der Wischleiste während eines Umkehrvorgangs zwischen zwei Wischvorgängen aus. Auf diese Weise können Umleggeräusche stark vermindert oder sogar vollständig vermieden werden.

Weitere vorteilhafte Ausführungsformen der vorliegenden Erfindung sind Gegenstand der Unteransprüche.

So ist es von Vorteil, wenn das Kopfteil der Wischleiste aus einem anderen Gummimaterial ausgeführt ist als das Dämpfungselement. Insbesondere unterscheiden sich die Gummimaterialien von Kopfteil und Dämpfungselement hinsichtlich ihres elastischen Verhaltens. Dabei ist insbesondere von Vorteil, wenn das Dämpfungselement beispielsweise aus einem porösen Gummimaterial ausgeführt ist.

Weiterhin ist von Vorteil, wenn das Dämpfungselement beispielsweise aus dem gleichen Gummimaterial ausgeführt ist wie der Kippsteg und der Wischkeil der Wischleiste. Dies beruht darauf, dass üblicherweise das Kopfteil einer Wischleiste aus einem vergleichsweise harten Gummimaterial ausgeführt ist, während Kippsteg und Wischkeil aus einem weicheren bzw. elastischeren Gummimaterial ausgeführt sind. Ein derartiges elastischeres Gummimaterial zeigt auch bei einem Dämpfungselement günstige Eigenschaften in Bezug auf dessen Funktion der Geräuschdämpfung. Ein weiterer Vorteil besteht darin, dass die bisher verwendeten Gummisorten für das Kopfteil bzw. für den Kippsteg und den Wischkeil weiterhin verwendet werden können und die Verwendung eines dritten, zusätzlichen Gummimaterials vermieden wird.

Weiterhin ist es möglich, für das Kopfteil und das Dämpfungselement der Wischleiste zwar grundsätzlich die gleiche Gummisorte zu verwenden, jedoch von derselben Gummisorte jeweils ein Gummimaterial unterschiedlicher Shore-Härte. Dabei wird beispielsweise für das Kopfteil ein Gummimaterial höherer Shore-Härte verwendet und für das Dämpfungselement ein Gummimaterial geringerer Shore-Härte.

Gemäß einer weiteren vorteilhaften Ausführungsform der vorliegenden Erfindung umfasst die erfindungsgemäße Wischleiste ein weiteres Dämpfungselement, welches zwischen dem Wischkeil und dem Kopfteil positioniert ist und welches in Richtung zu seinem freien Ende hin einen zunehmenden Abstand zum Kopfteil der Wischleiste aufweist. Im Umkehrpunkt der Wischleiste zwischen zwei Wischbewegungen kommt es zu einem Kippen der Wischleiste im Bereich des Kippstegs und somit zu einem möglichen Anschlagen des Dämpfungselements an Bereiche des Kopfteils. Da es sich hierbei um einen gedämpften Anschlag handelt, führt diese Maßnahme zu einer weiteren Verringerung von Umlegegeräuschen der Wischleiste im Betrieb.

Gemäß einer besonders vorteilhaften Ausführungsform der vorliegenden Erfindung umfasst die erfindungsgemäße Wischleiste weiterhin ein weiteres Dämpfungselement, welches beispielsweise ebenfalls wie das erste Dämpfungselement im Bereich der Längsnuten der Wischleiste positioniert ist und das ebenfalls mit seinem freien Ende so positioniert ist, dass es den Öffnungsquerschnitt einer der Längsnuten verjüngt bzw. verengt. Dieses weitere Dämpfungselement ist jedoch im Bereich der Längsnuten so angeordnet, dass es an einer Seitenbegrenzungsfläche der Längsnut angeordnet ist, die einer weiteren Seitenbegrenzungsfläche gegenüberliegt, an der das erste Dämpfungselement angeordnet ist. Dies ermöglicht ein vereinfachtes Einführen einer Federschiene in die Längsnuten der Wischleiste. Dabei ist es möglich, dass das freie Ende des weiteren Dämpfungselements die Längsnut bezogen auf den Verlauf des freien Endes des ersten Dämpfungselements gegensinnig verengt.

Gemäß einer weiteren besonders vorteilhaften Ausführungsform der vorliegenden Erfindung ist das Dämpfungselement der Wischleiste in einem Bereich, der in Kontakt mit einer in die Längsnut einzuführenden oder eingeführten Federschiene kommt, mit einem gebogenen oder abgeflachten Querschnitt ausgeführt.

Beide Maßnahmen bewirken, dass sich bei der Montage des Wischblatts die entsprechende Wischleiste auf einfache Weise mit Federschienen versehen lässt, da der Reibungswiderstand zwischen Federschiene und dem Gummimaterial der Wischleiste verringert ist.

Die erfindungsgemäße Wischleiste findet beispielsweise Anwendung in Wischblättern für Fahrzeuge, wie Kraftfahrzeuge, Schienen- oder Luftfahrzeuge. Weiterhin eignet sich die Wischleiste bzw. ein diese enthaltendes Wischblatt zur Reinigung von stationären Gebäudeverglasungen oder zur Reinigung von Sensoroberflächen, insbesondere von Oberflächen optischer Sensoren.

### Kurze Beschreibung der Zeichnung

In der Zeichnung sind Ausführungsformen der vorliegenden Erfindung dargestellt und in der sich anschließenden Figurenbeschreibung näher erläutert. Es zeigt:
- Figur 1a, 1b: den schematischen Querschnitt eines Wischblatts gemäß Stand der Technik,
- Figur 2: den schematischen Querschnitt einer Wischleiste gemäß einer ersten Ausführungsform der vorliegenden Erfindung,
- Figur 3: den schematischen Querschnitt eines Wischblatts gemäß einer Ausführungsform der vorliegenden Erfindung,
- Figuren 4a bis 4c: das in Figur 3 dargestellte Wischblatt während einer Wischbewegung,
- Figur 5: den schematischen Querschnitt einer Wischleiste gemäß einer zweiten Ausführungsform der vorliegenden Erfindung,
- Figur 6: den schematischen Querschnitt einer Wischleiste gemäß einer dritten Ausführungsform der vorliegenden Erfindung,
- Figur 7: den schematischen Querschnitt einer Wischleiste gemäß einer vierten Ausführungsform der vorliegenden Erfindung,
- Figur 8: den schematischen Querschnitt einer Wischleiste gemäß einer fünften Ausführungsform der vorliegenden Erfindung,
- Figur 9: den schematischen Querschnitt einer Wischleiste gemäß einer sechsten Ausführungsform der vorliegenden Erfindung,
- Figur 10: den schematischen Querschnitt einer Wischleiste gemäß einer siebten Ausführungsform der vorliegenden Erfindung,
- Figur 11: den schematischen Querschnitt einer Wischleiste gemäß einer achten Ausführungsform der vorliegenden Erfindung,
- Figur 12: den schematischen Querschnitt einer Wischleiste gemäß einer neunten Ausführungsform der vorliegenden Erfindung,
- Figur 13: den schematischen Querschnitt einer Wischleiste gemäß einer zehnten Ausführungsform der vorliegenden Erfindung,
- Figur 14: den schematischen Querschnitt einer Wischleiste gemäß einer elften Ausführungsform der vorliegenden Erfindung,
- Figur 15: den schematischen Querschnitt einer Wischleiste gemäß einer zwölften Ausführungsform der vorliegenden Erfindung,
- Figur 16: den schematischen Querschnitt einer Wischleiste gemäß einer dreizehnten Ausführungsform der vorliegenden Erfindung,
- Figur 17: den schematischen Querschnitt einer Wischleiste gemäß einer vierzehnten Ausführungsform der vorliegenden Erfindung
- Figur 18: den schematischen Querschnitt einer Wischleiste gemäß einer fünfzehnten Ausführungsform der vorliegenden Erfindung,
- Figur 19: den schematischen Querschnitt einer Wischleiste gemäß einer sechzehnten Ausführungsform der vorliegenden Erfindung und
- Figur 20: den schematischen Querschnitt einer Wischleiste gemäß einer siebzehnten Ausführungsform der vorliegenden Erfindung.

### Beschreibung der Ausführungsbeispiele

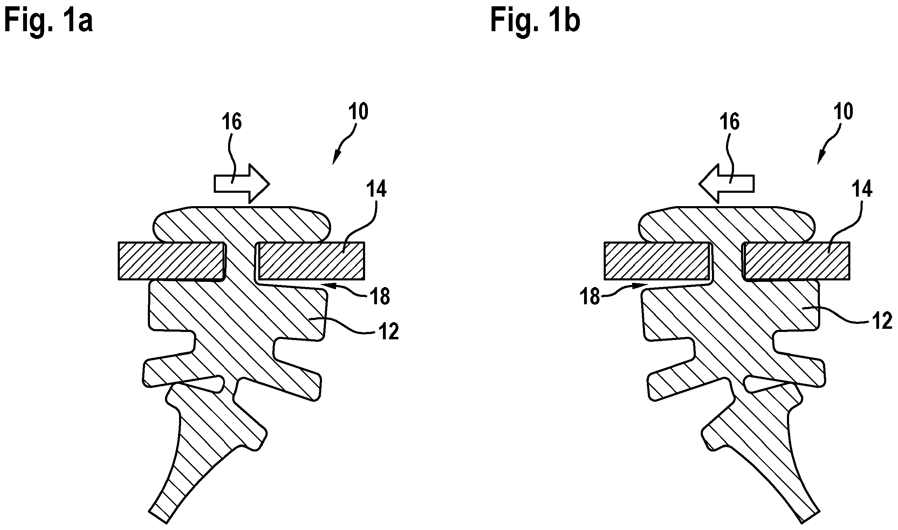

In den Figuren 1a und 1b ist ein Wischblatt gemäß Stand der Technik während einer Wischbewegung dargestellt. Dabei umfasst das Wischblatt 10 einen Gummikörper 12 sowie in diesen eingreifende Federschienen 14. Wird das Wischblatt 10 über eine zu reinigende Oberfläche in einer durch Pfeile 16 verdeutlichten Bewegungsrichtung geführt, so kommt es in den Bereichen 18 zur Ablösung des Gummikörpers 12 von der Oberfläche der Federschiene 14. Bei einem Wechsel der Bewegungsrichtung kommt es somit, bedingt durch eine gegenteilige Deformation des Gummikörpers 12, zu einem Umklappgeräusch, welches im Wesentlichen dem Auftreffen des Gummikörpers 12 auf die Oberflächen der Federschiene 14 zuzuordnen ist.

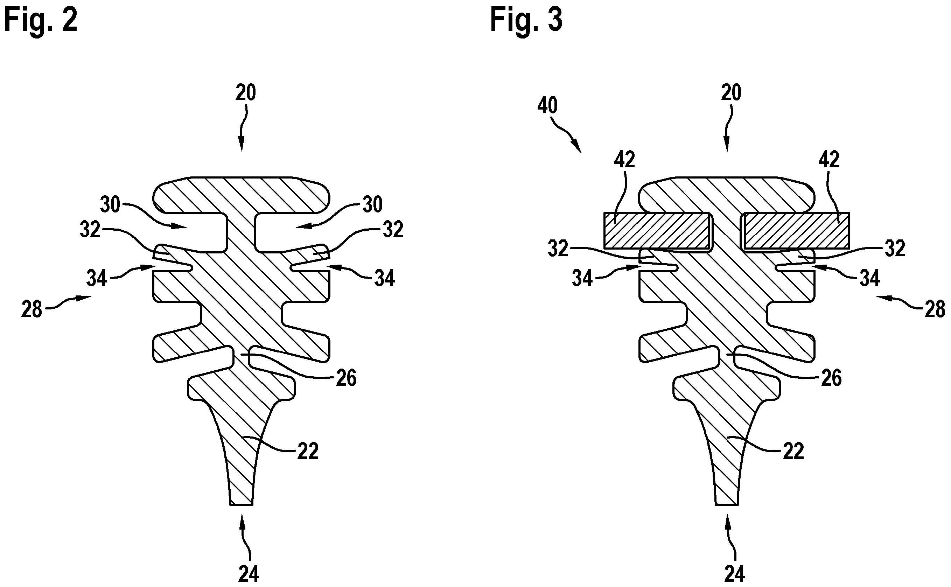

In Figur 2 ist eine Wischleiste gemäß einer ersten Ausführungsform der vorliegenden Erfindung dargestellt. Die Wischleiste 20 umfasst dabei einen Wischkeil 22, der endständig eine Wischlippe 24 ausbildet. Der Wischkeil 22 ist über einen Kippsteg 26 mit einem Kopfteil 28 der Wischleiste 20 verbunden. Das Kopfteil 28 ist beispielsweise aus einem härteren Gummimaterial ausgeführt als der Kippsteg 26 bzw. der Wischkeil 22. Weiterhin umfasst das Kopfteil 28 zwei auf gegenüberliegenden Seiten des Kopfteils 28 eingebrachte Längsnuten 30. Diese dienen dem Eingriff eines Trageelementes, beispielsweise in Form metallischer Federschienen, das der Befestigung der Wischleiste 20 an einem Wischarm dient.

Darüber hinaus umfasst das Kopfteil 28 zusätzlich erste Dämpfungselemente 32, welche auf gegenüberliegenden Seiten des Kopfteils 28 im Bereich der Längsnuten 30 ausgebildet sind. Dabei haben die ersten Dämpfungselemente 32 beispielsweise eine streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihrem endständigen, dem Kopfteil 28 abgewandten, freien Teil oder Ende den lichten Querschnitt der Längsnuten 30 verringern bzw. verengen oder verjüngen.

Weiterhin sind die ersten Dämpfungselemente 32 so am Kopfteil 28 ausgebildet dass sich zwischen ihnen und dem Material des Kopfteils 28 den Längsnuten 30 abgewandt Spalten 34 ausbilden, wobei sich die Spaltbreite der Spalten 34 in Richtung der freien Enden der ersten Dämpfungselemente 32 vergrößert bzw. erweitert.

Die ersten Dämpfungselemente 32 sind beispielsweise aus einem weichen bzw. hochelastischen Gummimaterial ausgeführt. Dabei kann es sich beispielsweise um das Gummimaterial handeln, aus dem auch der Kippsteg 26 bzw. der Wischkeil 22 der Wischleiste 20 ausgeführt sind. Es besteht jedoch auch die Möglichkeit, als Gummimaterial für die ersten Dämpfungselemente 32 ein poröses oder schaumartiges Gummimaterial zu verwenden. Darüber hinaus besteht die Möglichkeit, dass die ersten Dämpfungselemente 32 zwar aus der gleichen Gummisorte bestehen wie das Kopfteil 28, jedoch aus einem Gummimaterial, bei dem die Shore-Härte verglichen mit dem Gummimaterial des Kopfteils 28 verringert ist. Die ersten Dämpfungselemente 32 und das Kopfteil 28 der Wischleiste 20 können bspw. mittels Koextrusion hergestellt werden.

In Figur 3 ist ein Wischblatt 40 schematisch dargestellt, welches eine Wischleiste 20 gemäß Figur 1 umfasst. Dabei bezeichnen gleiche Bezugszeichen gleiche Bauteilkomponenten wie in Figur 2.

Das Wischblatt 40 umfasst neben der Wischleiste 20 zusätzlich Federschienen 42, welche als Tragelement für die Wischleiste 20 dienen und welche in die Längsnuten 30 der Wischleiste 20 beidseitig eingeführt sind. Wie aus Figur 3 schematisch erkennbar, führt das Einschieben der Federschienen 42 zu einem Aufweiten der Längsnut 30 in deren durch die Existenz der ersten Dämpfungselemente 32 verengten Bereichen.

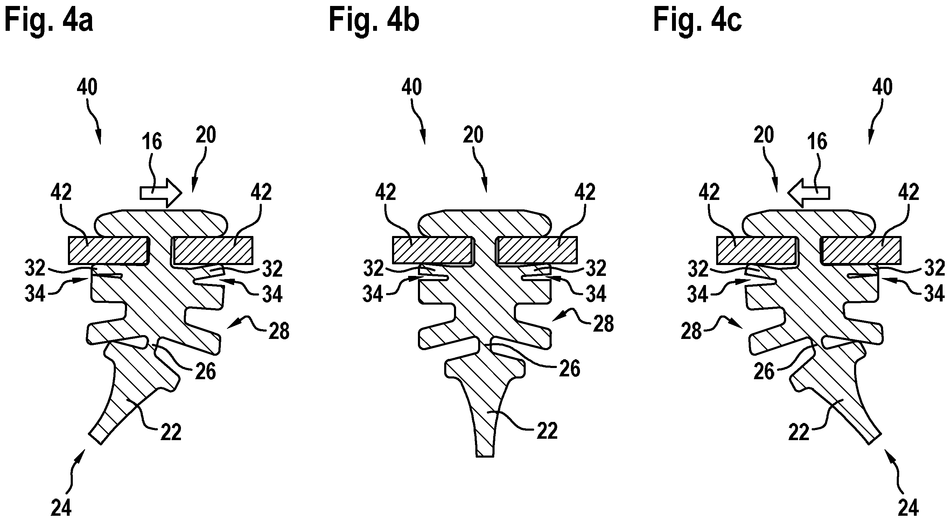

In den Figuren 4a bis 4c ist schematisch das Verhalten des Wischblatts 40 während unterschiedlicher Stadien eines Wischvorgangs über eine zu reinigende Oberfläche dargestellt. Es bezeichnen weiterhin gleiche Bezugszeichen gleiche Bauteilkomponenten wie in den vorhergehenden Figuren.

Die Figuren 4a bis 4c verdeutlichen insbesondere die bei einer Umkehr der Bewegungsrichtung des Wischblatts 40 im Betrieb auftretenden Verformungen der Wischleiste 20. So ist in Figur 4a das Wischblatt 40 während einer durch den Pfeil 16 verdeutlichten ersten Bewegungsrichtung dargestellt, in Figur 4b während eines eintretenden Stillstandes am Umkehrpunkt und in Figur 4c ein Wischblatt 40 während einer nach dem Umkehrpunkt eintretenden gegenläufigen Bewegung des Wischblatts 40, welche ebenfalls durch einen Pfeil 16 verdeutlicht ist. Erkennbar ist, dass in keiner der Bewegungsstadien, die in Figur 4a bis 4c verdeutlicht sind, eine Ablösung der Wischleiste 20 von den Federschienen 42 eintritt, sondern dass die Federschienen 42 während des gesamten Vorgangs immer beidseitig durch Komponenten des Kopfteils 28 der Wischleiste 20 begrenzt und geführt sind.

Weiterhin ist erkennbar, dass - wie in den Figuren 4a und 4c verdeutlicht wird - die auf die Wischleiste 20 wirkenden Scherkräfte durch eine Verengung der Spalten 34 kräftemäßig teilweise abgefangen und durch die dämpfende Wirkung der ersten Dämpfungselemente 32 einer Geräuschbildung vorgebeugt wird. Durch Schließen des Spalts 34 erfolgt somit ein Abstützen der Wischleiste 20 auf der Federschiene 42. Dies führt zu einer weitgehenden Verringerung der Geräuschbildung in diesem Bereich.

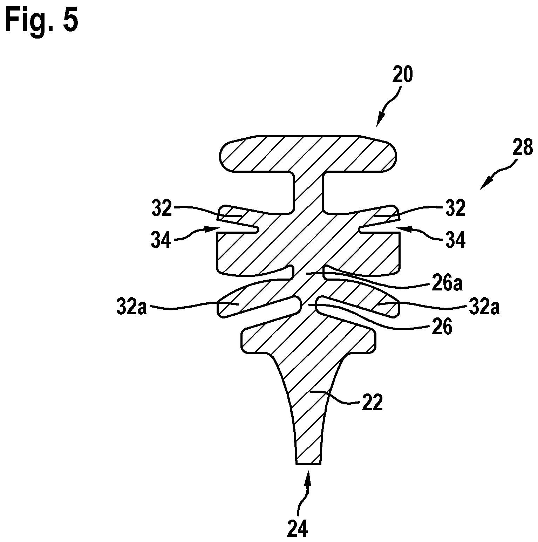

In Figur 5 ist schematisch eine Wischleiste gemäß einer zweiten Ausführungsform der vorliegenden Erfindung dargestellt.

Die in Figur 5 dargestellte Wischleiste 20 umfasst neben ersten Dämpfungselementen 32 zusätzlich weitere Dämpfungselemente 32a, welche im Bereich des Kippstegs 26 vorgesehen sind. Aus diesem Grund umfasst die Wischleiste 20 einen ersten Kippsteg 26 und einen zweiten Kippsteg 26a, wobei zwischen den beiden Kippstegen 26, 26a die weiteren Dämpfungselemente 32a positioniert sind. Die weiteren Dämpfungselemente 32a weisen einen vergleichbaren Aufbau wie die ersten Dämpfungselemente 32 auf und sind beispielsweise streifenförmig ausgeführt und bspw. stirnseitig an der Wischleiste 20 verankert.

Während eines Wischvorgangs kommt es, wie bereits beschrieben, zu einem Kippen des Gummikörpers der Wischleiste 20. Die weiteren Dämpfungselemente 32a führen nun dazu, dass es beim Verkippen des Wischkeils 22 gegenüber dem Kopfteil 28 nicht zu einem harten Aufprall von Teilen des Wischkeils 22 auf die ihm zugewandte Großfläche des Kopfteils 28 kommt, sondern - aufgrund der dazwischen angeordneten weiteren Dämpfungselemente 32a - zu einem gedämpften Aufprall und somit zur Unterdrückung von Umlegegeräuschen. Die weiteren Dämpfungselemente 32a können beispielsweise aus dem gleichen Gummimaterial ausgeführt sein wie die ersten Dämpfungselemente 32.

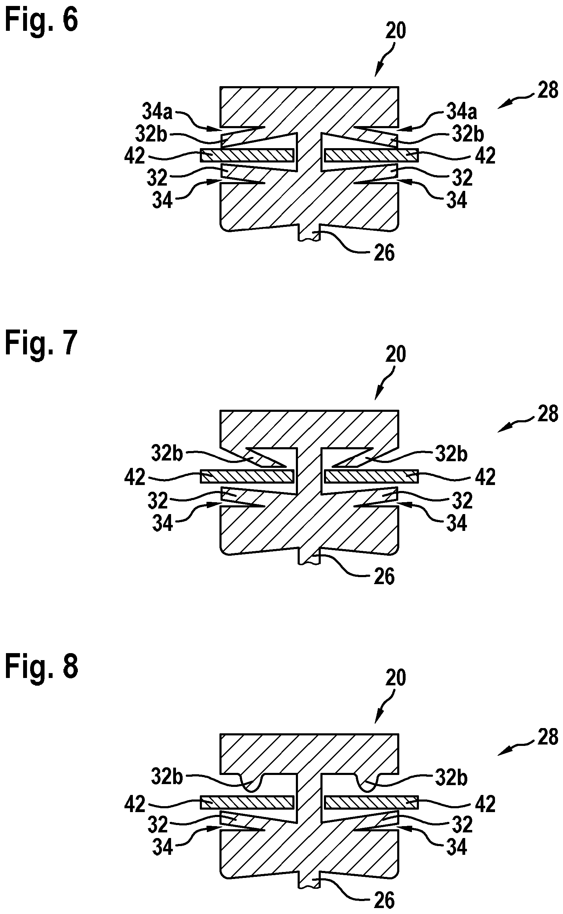

In Figur 6 ist schematisch eine Wischleiste gemäß einer dritten Ausführungsform der vorliegenden Erfindung dargestellt.

Die in Figur 6 dargestellte Wischleiste 20 umfasst neben den ersten Dämpfungselementen 32 zusätzlich weitere Dämpfungselemente 32b, welche horizontal spiegelbildlich angeordnet ebenfalls im Bereich des Kopfteils 28 in der Längsnut 30 vorgesehen sind. Dabei haben die weiteren Dämpfungselemente 32b beispielsweise wie die ersten Dämpfungselemente 32 eine streifenförmige Gestalt und sind beispielsweise mit einer ihrer Längsflächen ebenfalls an das Kopfteil 28 angeformt.

Die weiteren Dämpfungselemente 32b sind dabei im Bereich der Längsnuten 30 so angeordnet, dass sie an einer Seitenbegrenzungsfläche der Längsnut 30 angeordnet sind, die einer weiteren Seitenbegrenzungsfläche gegenüberliegt, an die ersten Dämpfungselemente 32 angeordnet sind. Dies ermöglicht ein vereinfachtes Einführen einer Federschiene 42 in die Längsnuten 30 der Wischleiste 20. Weiterhin sind die weiteren Dämpfungselemente 32b bezüglich des Kopfteils 28 so positioniert, dass sie jeweils mit ihrem endständigen, dem Kopfteil 28 abgewandten, freien Teil den lichten Querschnitt der Längsnuten 30 verringern bzw. verengen oder verjüngen.

Weiterhin sind auch die weiteren Dämpfungselemente 32b so am Kopfteil 28 ausgebildet, dass sich zwischen ihnen und dem Material des Kopfteils 28 den Längsnuten 30 abgewandt weitere Spalten 34a ausbilden, wobei sich die Spaltbreite der weiteren Spalten 34a in Richtung der freien Enden der weiteren Dämpfungselemente 32b vergrößert bzw. erweitert.

Die weiteren Dämpfungselemente 32b sind beispielsweise aus einem vergleichbaren Gummimaterial ausgeführt wie die ersten Dämpfungselemente 32.

Dies verringert mögliche Umklappgeräusche des Wischblatts im Umkehrpunkt zwischen zwei Wischbewegungen weiter und ermöglicht gleichzeitig ein vereinfachtes Einbringen der Federschienen 14 in die Längsnuten 30 des Kopfteils 28.

In Figur 7 ist schematisch eine Wischleiste gemäß einer vierten Ausführungsform der vorliegenden Erfindung dargestellt.

Die in Figur 7 dargestellte Wischleiste 20 umfasst neben den ersten Dämpfungselementen 32 ebenfalls zusätzlich weitere Dämpfungselemente 32b, welche horizontal spiegelbildlich angeordnet ebenfalls im Bereich des Kopfteils 28 in der Längsnut 30 vorgesehen sind. Dabei haben die weiteren Dämpfungselemente 32b beispielsweise wie die ersten Dämpfungselemente 32 eine streifenförmige Gestalt und sind beispielsweise mit einer ihrer Längsflächen ebenfalls an das Kopfteil 28 angeformt. Weiterhin sind die weiteren Dämpfungselemente 32b bezüglich des Kopfteils 28 so positioniert, dass sie jeweils mit ihrem endständigen, dem Kopfteil 28 abgewandten, freien Teil den lichten Querschnitt der Längsnuten 30 verringern bzw. verengen oder verjüngen.

Im Gegensatz zu der in Figur 6 gezeigten Ausführungsform sind die weiteren Dämpfungselemente 32b verglichen mit den weiteren Dämpfungselementen 32b gemäß Figur 6 gegensinnig angeordnet bzw. mit ihrem freien Teil dem zentralen Bereich des Kopfteils 28 zugewandt.

Die weiteren Dämpfungselemente 32b sind so am Kopfteil 28 ausgebildet, dass sich zwischen ihnen und dem Material des Kopfteils 28 dem Boden der Längsnuten 30 zugewandt weitere Spalten 34a ausbilden, wobei sich die Spaltbreite der weiteren Spalten 34a in Richtung der freien Enden der weiteren Dämpfungselemente 32b vergrößert bzw. erweitert.

In Figur 8 ist schematisch eine Wischleiste gemäß einer fünften Ausführungsform der vorliegenden Erfindung dargestellt.

Die in Figur 8 dargestellte Wischleiste 20 umfasst neben den ersten Dämpfungselementen 32 ebenfalls zusätzlich weitere Dämpfungselemente 32b, welche im Bereich der Längsnuten 30 so angeordnet sind, dass sie an einer Seitenbegrenzungsfläche der Längsnut 30 angeordnet sind, die einer weiteren Seitenbegrenzungsfläche gegenüberliegt, an die ersten Dämpfungselemente 32 angeordnet sind. Dabei sind die weiteren Dämpfungselemente 32b bspw. als den Querschnitt der Längsnut verengende Erhebungen ausgebildet. Auch dies ermöglicht ein vereinfachtes Einführen einer Federschiene 42 in die Längsnuten 30 der Wischleiste 20.

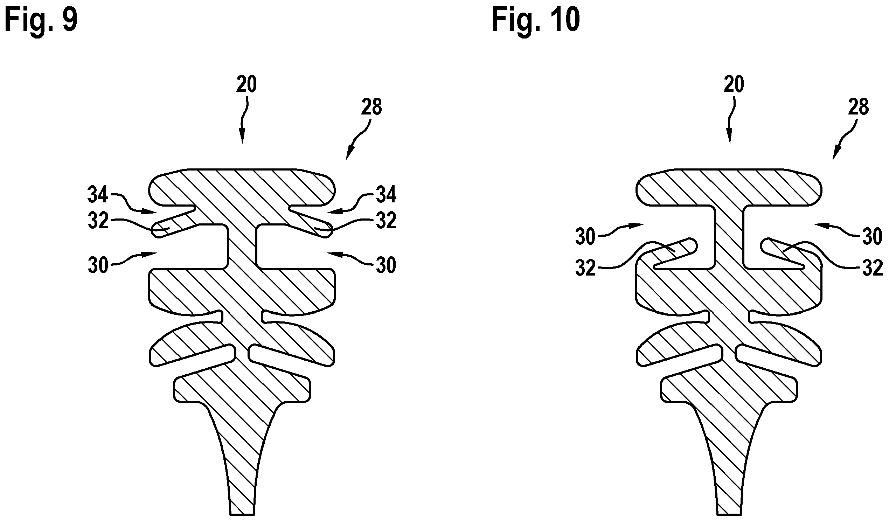

In Figur 9 ist schematisch eine Wischleiste gemäß einer sechsten Ausführungsform der vorliegenden Erfindung dargestellt.

Das Kopfteil 28 der Wischleiste 20 umfasst dabei wie bei der in Figur 2 dargestellten ersten Ausführungsform erste Dämpfungselemente 32, welche auf gegenüberliegenden Seiten des Kopfteils 28 im Bereich der Längsnuten 30 ausgebildet sind, allerdings auf gegenüberliegenden Seitenbegrenzungsflächen der Längsnuten 30 verglichen mit der Ausführungsform gemäß Figur 2. Dabei haben die ersten Dämpfungselemente 32 beispielsweise ebenfalls eine streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihrem endständigen, dem Kopfteil 28 abgewandten, freien Teil den lichten Querschnitt der Längsnuten 30 verringern bzw. verengen oder verjüngen.

Weiterhin sind die ersten Dämpfungselemente 32 ebenfalls so am Kopfteil 28 ausgebildet, dass sich zwischen ihnen und dem Material des Kopfteils 28 den Längsnuten 30 abgewandt Spalten 34 ausbilden, wobei sich die Spaltbreite der Spalten 34 in Richtung der freien Enden der ersten Dämpfungselemente 32 vergrößert bzw. erweitert.

In Figur 10 ist schematisch eine Wischleiste gemäß einer siebten Ausführungsform der vorliegenden Erfindung dargestellt.

Das Kopfteil 28 der Wischleiste 20 umfasst dabei wie bei der in Figur 2 dargestellten ersten Ausführungsform zusätzlich erste Dämpfungselemente 32, welche auf gegenüberliegenden Seiten des Kopfteils 28 im Bereich der Längsnuten 30 ausgebildet sind. Dabei haben die ersten Dämpfungselemente 32 beispielsweise ebenfalls eine streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihrem endständigen, dem Kopfteil 28 abgewandten, freien Teil den lichten Querschnitt der Längsnuten 30 verringern bzw. verengen oder verjüngen. Dies erfolgt hier allerdings verglichen mit der Ausführungsform gemäß Figur 2 in gegensinniger Art und Weise, indem die freien Teile bzw. Enden der ersten Dämpfungselemente 32 zur Mitte der Wischleiste hin orientiert sind.

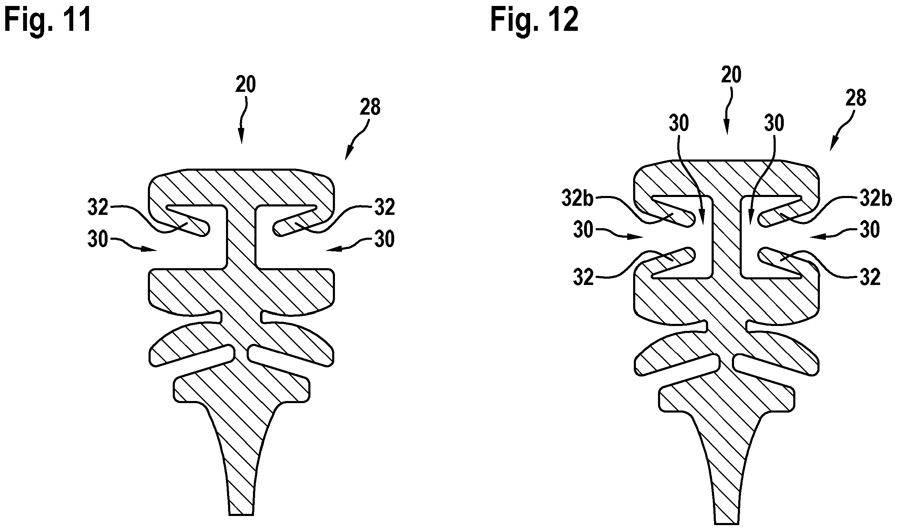

In Figur 11 ist schematisch eine Wischleiste gemäß einer achten Ausführungsform der vorliegenden Erfindung dargestellt.

Das Kopfteil 28 der Wischleiste 20 umfasst dabei wie bei der in Figur 9 dargestellten sechsten Ausführungsform erste Dämpfungselemente 32, welche auf gegenüberliegenden Seiten des Kopfteils 28 im Bereich der Längsnuten 30 auf Seitenbegrenzungsflächen der Längsnuten 30 gemäß Figur 9 ausgebildet sind. Weiterhin sind die ersten Dämpfungselemente 32 analog zu der in Figur 10 gezeigten siebten Ausführungsform mit ihren freien Teilen zur Mitte der Wischleiste 20 hin orientiert.

In Figur 12 ist schematisch eine Wischleiste gemäß einer neunten Ausführungsform der vorliegenden Erfindung dargestellt.

Das Kopfteil 28 der Wischleiste 20 umfasst dabei erste Dämpfungselemente 32, 32b welche in Kombination der Ausführungsformen sieben und acht auf gegenüberliegenden Seiten des Kopfteils 28 im Bereich der Längsnuten 30 und beidseitig auf gegenüberliegenden Seitenbegrenzungsflächen der Längsnuten 30 angeordnet und mit ihren freien Teilen zur Mitte der Wischleiste 20 hin orientiert sind.

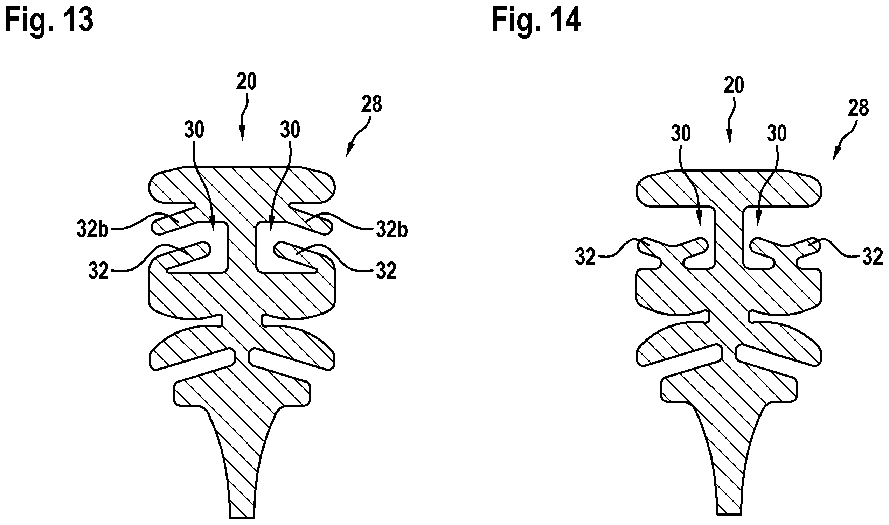

In Figur 13 ist schematisch eine Wischleiste gemäß einer zehnten Ausführungsform der vorliegenden Erfindung dargestellt.

Das Kopfteil 28 der Wischleiste 20 umfasst dabei erste Dämpfungselemente 32, 32b welche in Kombination der Ausführungsformen sechs und sieben auf gegenüberliegenden Seiten des Kopfteils 28 im Bereich der Längsnuten 30 und beidseitig auf gegenüberliegenden Seitenbegrenzungsflächen der Längsnuten 30 angeordnet sind.

In Figur 14 ist schematisch eine Wischleiste gemäß einer elften Ausführungsform der vorliegenden Erfindung dargestellt.

Das Kopfteil 28 der Wischleiste 20 umfasst dabei wie bei der in Figur 2 dargestellten ersten Ausführungsform erste Dämpfungselemente 32, welche auf gegenüberliegenden Seiten des Kopfteils 28 im Bereich der Längsnuten 30 ausgebildet sind. Dabei haben die ersten Dämpfungselemente 32 bspw. eine doppelt streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihren beiden endständigen, dem Kopfteil 28 abgewandten freien Teilen bzw. Enden den lichten Querschnitt der Längsnuten 30 verringern bzw. verengen oder verjüngen.

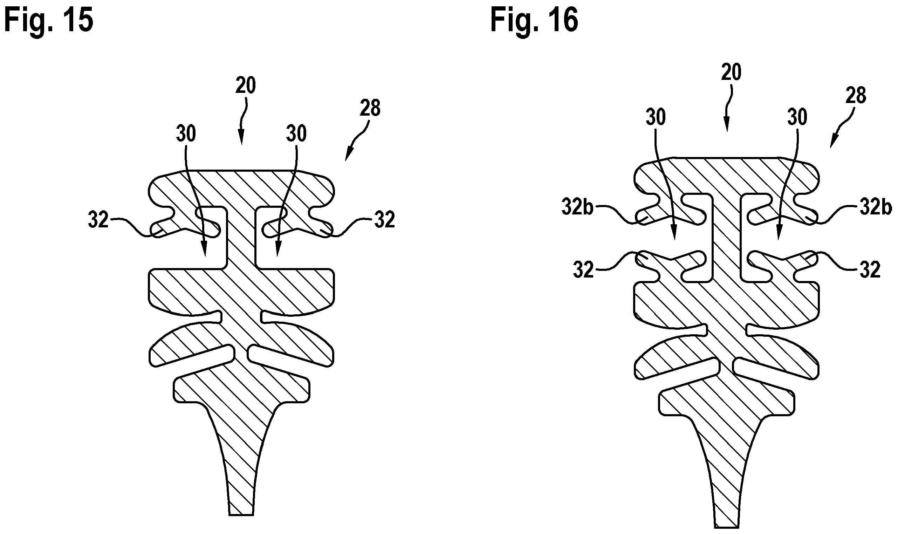

In Figur 15 ist schematisch eine Wischleiste gemäß einer zwölften Ausführungsform der vorliegenden Erfindung dargestellt.

Das Kopfteil 28 der Wischleiste 20 umfasst dabei wie bei der in Figur 14 dargestellten elften Ausführungsform erste Dämpfungselemente 32, welche auf gegenüberliegenden Seiten des Kopfteils 28 im Bereich der Längsnuten 30 ausgebildet sind, allerdings auf gegenüberliegenden Seitenbegrenzungsflächen der Längsnuten 30 verglichen mit der Ausführungsform gemäß Figur 14. Dabei haben die ersten Dämpfungselemente 32 bspw. ebenfalls eine doppelt streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihren beiden endständigen, dem Kopfteil 28 abgewandten freien Teilen oder Enden den lichten Querschnitt der Längsnuten 30 verringern bzw. verengen oder verjüngen.

In Figur 16 ist schematisch eine Wischleiste gemäß einer dreizehnten Ausführungsform der vorliegenden Erfindung dargestellt.

Das Kopfteil 28 der Wischleiste 20 umfasst dabei erste Dämpfungselemente 32, 32b welche in Kombination der Ausführungsformen elf und zwölf auf gegenüberliegenden Seiten des Kopfteils 28 im Bereich der Längsnuten 30 und beidseitig auf gegenüberliegenden Seitenbegrenzungsflächen der Längsnuten 30 angeordnet sind.

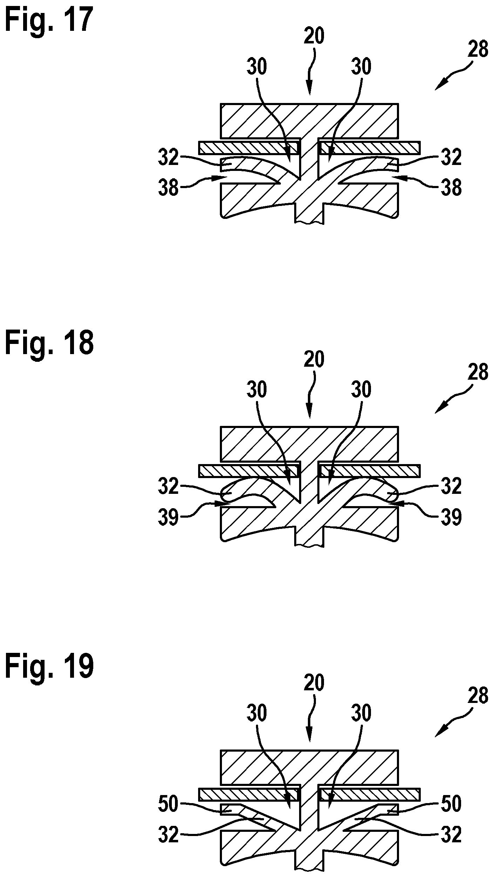

In Figur 17 ist schematisch eine Wischleiste gemäß einer vierzehnten Ausführungsform der vorliegenden Erfindung dargestellt.

Das Kopfteil 28 der Wischleiste 20 umfasst dabei wie bei der in Figur 2 dargestellten ersten Ausführungsform erste Dämpfungselemente 32, welche auf gegenüberliegenden Seiten des Kopfteils 28 im Bereich der Längsnuten 30 ausgebildet sind. Dabei haben die ersten Dämpfungselemente 32 beispielsweise ebenfalls eine streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihrem endständigen, dem Kopfteil 28 abgewandten, freien Teil den lichten Querschnitt der Längsnuten 30 verringern bzw. verengen oder verjüngen. Die ersten Dämpfungselemente 32 sind dabei so ausgestaltet, dass diese in denjenigen Bereichen, die bei Einführung eine Federleiste 42 in die Längsnuten 30 der Wischleiste 20 in oberflächlichen Kontakt mit der Federleiste 42 kommen, dieser zugewandt einen abgeflachten Bereich 38 aufweisen, der bevorzugt an der Oberfläche einer einzuführenden oder eingeführten Federschiene 42 flächig anliegt. Diese Ausführungsform gewährleistet dadurch eine besonders wirksame Unterdrückung von Umlegegeräuschen der Wischleiste 20 im späteren Betrieb.

In Figur 18 ist schematisch eine Wischleiste gemäß einer fünfzehnten Ausführungsform der vorliegenden Erfindung dargestellt.

Das Kopfteil 28 der Wischleiste 20 umfasst dabei wie bei der in Figur 17 dargestellten vierzehnten Ausführungsform erste Dämpfungselemente 32, welche auf gegenüberliegenden Seiten des Kopfteils 28 im Bereich der Längsnuten 30 ausgebildet sind. Dabei haben die ersten Dämpfungselemente 32 beispielsweise ebenfalls eine streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihrem endständigen, dem Kopfteil 28 abgewandten, freien Teil den lichten Querschnitt der Längsnuten 30 verringern bzw. verengen oder verjüngen. Die ersten Dämpfungselemente 32 sind dabei so ausgestaltet, dass diese in denjenigen Bereichen, die bei Einführung eine Federleiste 42 in die Längsnuten 30 der Wischleiste 20 in oberflächlichen Kontakt mit der Federleiste 42 kommen, dieser zugewandt einen gebogenen Bereich 39 aufweisen, der mit bevorzugt an der Oberfläche einer einzuführenden oder eingeführten Federschiene 42 flächig anliegt. Diese Ausführungsform gewährleistet dadurch ebenfalls eine besonders wirksame Unterdrückung von Umlegegeräuschen der Wischleiste 20 im späteren Betrieb.

In Figur 19 ist schematisch eine Wischleiste gemäß einer sechzehnten Ausführungsform der vorliegenden Erfindung dargestellt.

Das Kopfteil 28 der Wischleiste 20 umfasst dabei wie bei der in Figur 2 dargestellten ersten Ausführungsform erste Dämpfungselemente 32, welche auf gegenüberliegenden Seiten des Kopfteils 28 im Bereich der Längsnuten 30 ausgebildet sind. Dabei haben die ersten Dämpfungselemente 32 beispielsweise ebenfalls eine streifenförmige Gestalt und sind beispielsweise mit einer ihrer Längsflächen an das Kopfteil 28 angeformt. Weiterhin sind die ersten Dämpfungselemente 32 bezüglich des Kopfteils 28 so positioniert, dass sie jeweils mit ihrem endständigen, dem Kopfteil 28 abgewandten, freien Teil den lichten Querschnitt der Längsnuten 30 verringern bzw. verengen oder verjüngen. Die ersten Dämpfungselemente 32 sind dabei so ausgestaltet, dass ihre freien Teile oder Enden ein abgeschrägtes Profil 50 aufweisen, welches bei Einführung eine Federleiste 42 in die Längsnuten 30 der Wischleiste 20 in oberflächlichen Kontakt mit der Federleiste 42 kommt und bevorzugt an der Oberfläche einer einzuführenden oder eingeführten Federschiene 42 flächig anliegt. Diese Ausführungsform gewährleistet dadurch ebenfalls eine besonders wirksame Unterdrückung von Umlegegeräuschen der Wischleiste 20 im späteren Betrieb.

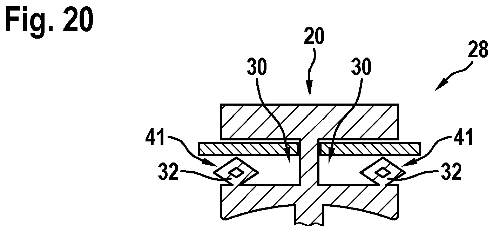

In Figur 20 ist schematisch eine Wischleiste gemäß einer siebzehnten Ausführungsform der vorliegenden Erfindung dargestellt.

Das Kopfteil 28 der Wischleiste 20 umfasst dabei wie bei der in Figur 2 dargestellten ersten Ausführungsform erste Dämpfungselemente 32, welche auf gegenüberliegenden Seiten des Kopfteils 28 im Bereich der Längsnuten 30 ausgebildet sind. Dabei sind die ersten Dämpfungselemente 32 beispielsweise als Hohlprofile 41 mit einem bspw. rautenförmigen Querschnitt ausgeführt und sind beispielsweise im Bereich einer Längskante an das Kopfteil 28 angeformt. Weiterhin sind die ersten Dämpfungselemente 32 bezüglich des Kopfteils 28 so positioniert, dass sie jeweils mit ihrer endständigen, dem Kopfteil 28 abgewandten, freien Längskante den lichten Querschnitt der Längsnuten 30 verringern bzw. verengen oder verjüngen.

## Patentansprüche

1. Wischleiste, umfassend einen Wischkeil (22), an dem eine Wischlippe (24) ausgebildet ist sowie ein Kopfteil (28), welches über einen Kippsteg (26) mit dem Wischkeil (22) verbunden ist und welches auf zwei gegenüberliegenden Seiten des Kopfteils (28) jeweils eine Längsnut (30) aufweist zum Eingriff einer Federschiene (42) in das Kopfteil (28) der Wischleiste (20), **dadurch gekennzeichnet, dass** das Kopfteil (28) weiterhin mindestens ein Dämpfungselement (32, 32b) aufweist, welches mit mindestens einem freien Ende den Querschnitt einer der Längsnuten (30) verjüngt.

2. Wischleiste nach Anspruch 1, **dadurch gekennzeichnet, dass** am Kopfteil (28) der Wischleiste (20) beidseitig ein Dämpfungselement (32, 32b) vorgesehen ist.

3. Wischleiste nach Anspruch 1 oder 2, **dadurch gekennzeichnet, dass** das mindestens eine Dämpfungselement (32, 32b) mit seinem freien Ende den Querschnitt einer der Längsnuten (30) verjüngt unter Ausbildung eines Spaltes (34a) zwischen dem Kopfteil (28) und einer der jeweiligen Längsnut (30) abgewandten Großfläche des freien Endes des Dämpfungselements (32, 32b).

4. Wischleiste nach einem der vorhergehenden Ansprüche, **dadurch gekennzeichnet, dass** mindestens ein erstes Dämpfungselement (32, 32b) an einer ersten Seitenbegrenzungsfläche der Längsnut (30) positioniert ist und mit seinem freien Ende den Querschnitt der Längsnut (30) verjüngt, und dass weiterhin mindestens ein weiteres Dämpfungselement (32b) vorgesehen ist, welches an einer der ersten Seitenbegrenzungsfläche gegenüberliegenden zweiten Seitenbegrenzungsfläche der Längsnut (30) positioniert ist welches mit seinem freien Ende den Querschnitt derselben Längsnut (30) verjüngt.

5. Wischleiste nach Anspruch 4, **dadurch gekennzeichnet, dass** das freie Ende des weiteren Dämpfungselements (32b) den Querschnitt der Längsnut (30) gegensinnig bezogen auf das freie Ende des ersten Dämpfungselements (32) verjüngt.

6. Wischleiste nach einem der vorhergehenden Ansprüche, **dadurch gekennzeichnet, dass** das Dämpfungselement (32, 32b) in einem Bereich, der in Kontakt mit einer in die Längsnut (30) einzuführenden Federschiene (42) kommt, einen gebogenen oder abgeflachten Querschnitt (38, 39) aufweist.

7. Wischleiste gemäß einem der vorhergehenden Ansprüche, **dadurch gekennzeichnet, dass** zwischen dem Wischkeil (22) und dem Kopfteil (28) ein weiteres Dämpfungselement (32a) angeordnet ist, wobei ein Abstand zwischen dem weiteren Dämpfungselement (32a) zu dem Kopfteil (28) in Richtung zu einem freien Ende des weiteren Dämpfungselements (32a) hin zunimmt.

8. Wischleiste nach einem der vorhergehenden Ansprüche, **dadurch gekennzeichnet, dass** das Kopfteil (28) und das Dämpfungselement (32, 32a, 32b) unterschiedliche Gummisorten mit unterschiedlich elastischem Verhalten aufweisen.

9. Wischleiste nach einem der vorhergehenden Ansprüche, **dadurch gekennzeichnet, dass** das Dämpfungselement (32, 32a, 32b) zumindest bereichsweise aus einem porösen Gummimaterial ausgeführt ist.

10. Wischleiste nach einem der vorhergehenden Ansprüche, **dadurch gekennzeichnet, dass** das Dämpfungselement (32, 32a, 32b) aus demselben Gummimaterial ausgeführt ist wie der Wischkeil (22), die Wischlippe (24) und/oder der Kippsteg (26) der Wischleiste (20).

11. Wischleiste nach einem der Ansprüche 1 bis 7, **dadurch gekennzeichnet, dass** das Dämpfungselement (32, 32a, 32b) aus der gleichen Gummisorte, jedoch mit einer abweichenden Shore-Härte verglichen mit dem Kopfteil (28) der Wischleiste (20) ausgeführt ist.

12. Wischblatt, enthaltend eine Wischleiste nach einem der vorhergehenden Ansprüche.

13. Verwendung einer Wischleiste gemäß einem der Ansprüche 1 bis 11 oder eines Wischblatts gemäß Anspruch 12 zur Reinigung von Fahrzeugscheiben oder von stationären Gebäudeverglasungen sowie von Sensoroberflächen.

## Claims

1. Wiper strip comprising a wiping wedge (22), on which a wiper lip (24) is formed, and a head part (28), which is connected via a tilting web (26) to the wiping wedge (22) and which in each case has a longitudinal groove (30) on two opposite sides of the head part (28) for engagement of a spring rail (42) in the head part (28) of the wiper strip (20), **characterized in that** the head part (28) further comprises at least one damping element (32, 32b) which, with at least one free end, tapers the cross section of one of the longitudinal grooves (30).

2. Wiper strip according to Claim 1, **characterized in that** a damping element (32, 32b) is provided on both sides of the head part (28) of the wiper strip (20).

3. Wiper strip according to Claim 1 or 2, **characterized in that** the at least one damping element (32, 32b), with its free end, tapers the cross section of one of the longitudinal grooves (30), thus forming a gap (34a) between the head part (28) and a large area of the free end of the damping element (32, 32b) facing away from the respective longitudinal groove (30).

4. Wiper strip according to any one of the preceding claims, **characterized in that** at least one first damping element (32, 32b) is positioned on a first side boundary surface of the longitudinal groove (30) and, with its free end, tapers the cross section of the longitudinal groove (30), and **in that** at least one further damping element (32b) is also provided, which is positioned on a second side boundary surface of the longitudinal groove (30) opposite the first side boundary surface and which, with its free end, tapers the cross section of the same longitudinal groove (30).

5. Wiper strip according to Claim 4, **characterized in that** the free end of the further damping element (32b) tapers the cross section of the longitudinal groove (30) in the opposite direction with respect to the free end of the first damping element (32).

6. Wiper strip according to any one of the preceding claims, **characterized in that** the damping element (32, 32b) has a curved or flattened cross section (38, 39) in a region which comes into contact with a spring rail (42) to be introduced into the longitudinal groove (30).

7. Wiper strip according to any one of the preceding claims, **characterized in that** a further damping element (32a) is arranged between the wiping wedge (22) and the head part (28), wherein a distance between the further damping element (32a) and the head part (28) increases in the direction towards a free end of the further damping element (32a).

8. Wiper strip according to any one of the preceding claims, **characterized in that** the head part (28) and the damping element (32, 32a, 32b) have different types of rubber with differing elastic behaviour.

9. Wiper strip according to any one of the preceding claims, **characterized in that** the damping element (32, 32a, 32b) is at least partially made of a porous rubber material.

10. Wiper strip according to any one of the preceding claims, **characterized in that** the damping element (32, 32a, 32b) is made of the same rubber material as the wiping wedge (22), the wiper lip (24) and/or the tilting web (26) of the wiper strip (20).

11. Wiper strip according to any one of Claims 1 to 7, **characterized in that** the damping element (32, 32a, 32b) is made of the same type of rubber, but with a different Shore hardness compared to the head part (28) of the wiper strip (20).

12. Wiper blade containing a wiper strip according to any one of the preceding claims.

13. Use of a wiper strip according to any one of Claims 1 to 11 or of a wiper blade according to Claim 12 for cleaning vehicle windows or stationary building glazing and also sensor surfaces.

## Revendications

1. Lame d'essuie-glace, comprenant un coin d'essuie-glace (22) sur lequel est formée une lèvre d'essuie-glace (24) et une partie de tête (28), qui est reliée au coin d'essuie-glace (22) par une nervure de basculement (26) et qui comporte respectivement une rainure longitudinale (30) sur deux côtés opposés de la partie de tête (28) destinée à amener un rail élastique (42) en prise avec la partie de tête (28) de la lame d'essuie-glace (20), **caractérisée en ce que** la partie de tête (28) comporte par ailleurs au moins un élément d'amortissement (32, 32b), qui rétrécit la section transversale d'une des rainures longitudinales (30) avec au moins une extrémité libre.

2. Lame d'essuie-glace selon la revendication 1, **caractérisée en ce qu'**un élément d'amortissement (32, 32b) est prévu des deux côtés sur la partie de tête (28) de la lame d'essuie-glace (20).

3. Lame d'essuie-glace selon la revendication 1 ou 2, **caractérisée en ce que** l'au moins un élément d'amortissement (32, 32b) rétrécit avec son extrémité libre la section transversale de l'une des rainures longitudinales (30) tout en formant une fente (34a) entre la partie de tête (28) et une grande surface de l'extrémité libre de l'élément d'amortissement (32, 32b) opposée à la rainure longitudinale (30) respective.

4. Lame d'essuie-glace selon l'une des revendications précédentes, **caractérisée en ce qu'**au moins un premier élément d'amortissement (32, 32b) est positionné sur une première surface de délimitation latérale de la rainure longitudinale (30) et rétrécit la section transversale de la rainure longitudinale (30) par son extrémité libre, et que par ailleurs au moins un autre élément d'amortissement (32b) est prévu, lequel est positionné sur une deuxième surface de délimitation latérale de la rainure longitudinale (30) faisant face à la première surface de délimitation latérale et qui rétrécit la section transversale de la même rainure longitudinale (30) avec son extrémité libre.

5. Lame d'essuie-glace selon la revendication 4, **caractérisée en ce que** l'extrémité libre de l'autre élément d'amortissement (32b) rétrécit la section transversale de la rainure longitudinale (30) dans des directions opposées par rapport à l'extrémité libre du premier élément d'amortissement (32).

6. Lame d'essuie-glace selon l'une des revendications précédentes, **caractérisée en ce que** l'élément d'amortissement (32, 32b) comporte une section transversale (38, 39) courbée ou aplatie dans une zone qui vient en contact avec un rail élastique (42) à introduire dans la rainure longitudinale (30).

7. Lame d'essuie-glace selon l'une des revendications précédentes, **caractérisée en ce qu'**un autre élément d'amortissement (32a) est disposé entre le coin d'essuie-glace (22) et la partie de tête (28), une distance entre l'autre élément d'amortissement (32a) et la partie de tête (28) augmentant en direction d'une extrémité libre de l'autre élément d'amortissement (32a).

8. Lame d'essuie-glace selon l'une des revendications précédentes, **caractérisée en ce que** la partie de tête (28) et l'élément d'amortissement (32, 32a, 32b) comportent des caoutchoucs de types différents avec un comportement élastique différent.

9. Lame d'essuie-glace selon l'une des revendications précédentes, **caractérisée en ce que** l'élément d'amortissement (32, 32a, 32b) est réalisé au moins par endroits à partir d'un matériau poreux en caoutchouc.

10. Lame d'essuie-glace selon l'une des revendications précédentes, **caractérisée en ce que** l'élément d'amortissement (32, 32a, 32b) est réalisé à partir du même matériau en caoutchouc que le coin d'essuie-glace (22), la lèvre d'essuie-glace (24) et/ou la nervure de basculement (26) de la lame d'essuie-glace (20).

11. Lame d'essuie-glace selon l'une des revendications 1 à 7, **caractérisée en ce que** l'élément d'amortissement (32, 32a, 32b) est réalisé à partir du caoutchouc de même type, toutefois avec une dureté Shore différente en comparaison avec la partie de tête (28) de la lame d'essuie-glace (20).

12. Balai d'essuie-glace contenant une lame d'essuie-glace selon l'une des revendications précédentes.

13. Utilisation d'une lame d'essuie-glace selon l'une des revendications 1 à 11 ou d'un balai d'essuie-glace selon la revendication 12 pour le nettoyage de vitres de véhicule ou de vitrages fixes de bâtiment ainsi que de surfaces de capteur.
